# EUROPEAN PATENT SPECIFICATION

(11) **EP 0 483 920 B1**
(45) Date of publication and mention of the grant of the patent: **10.08.1994**
(21) Application number: 91202773.7
(22) Date of filing: 25.10.1991
(51) Int. Cl.: A01G 31/00, G01F 11/00

(54) **Device for the metered supply of a metering liquid**
Vorrichtung zur dosierten Abgabe einer Dosierflüssigkeit
Dispositif d'alimentation dosée d'un liquide dosant

(30) Priority: 30.10.1990 NL 9002356
(43) Date of publication of application: 06.05.1992
(73) Proprietor: PRIVA AGRO HOLDING B.V., 2678 LC De Lier (NL)
(72) Inventor: Oosenbrug, Albert-Jan, NL-2722 ZE Zoetermeer (NL); Zwartveld, Dick, NL-2675 VR Honselersdijk (NL)
(74) Representative: Timmers, Cornelis Herman Johannes

(56) References cited:
- EP-A- 0 172 000
- EP-A- 0 363 168
- DE-A- 2 602 759
- US-A- 4 895 303
- TUINDERIJ. vol. 69, no. 25, 7 December 1989, DOETINCHEM NL pages 48 - 49; C. MOL: 'TOEDIENING IS NU EXACT TE METEN'

## Description

The invention relates to a device such as described in the preamble of claim 1 and known in itself from EP-A-0 363 168.

In this known device water is supplied via a watermeter to a main pipe into which metered amounts of nutrient and/or fertiliser are introduced; the mixture of water and nutrient and/or fertiliser is then fed to a mixing tank and from there to a distribution system with its main conduit and branch conduits.

Such a device is used in the so-called hydroponic cultivation, where plants are not growing in soil containing fertiliser and nutrients, but in a substrate to which the substances necessarry for growth are supplied via irrigation water. The irrigation water is drawn from the mixing tank and fed via various valves, controlled by the control unit, to the various substrates. This known device operates in a discontinous process.

The invention is based on the insight that a continous process-in which the irrigation water is circulated constantly and the remaining irrigation water is mixed with freshly supplied water-offers advantages particularly when one changes often the composition of the irrigation water by changing the relative amounts of nutrient and/or fertiliser. However, it must then be possible that the various substances to be added are acurately metered to the irrigation water without the risk that the supply channels, through which a metered amount of fertiliser or nutrient is fed into the pipe, become obstructed or clogged.

According to the invention this is obtained by means of the measures as described in characterising clause of the main claim.

Preferred embodiments are described in the claims 2-6.

It is observed that using accurate flow sensors for adding metered amounts of liquid fertiliser to irrigation water, and positioned between supply vessels and a static mixer, is known in itself from "TUINDERIJ" volume 69, nr. 25, December 7, 1989 pages 48-49, title: "Toediening is nu exact te meten".

The invention is explained with reference to the drawing, in which:
Figure 1 is a general flow chart of a device for hydroponic cultivation in which the metering device according to the invention is used;
Figure 2 shows, also schematically, but in greater detail, the layout of said device with the components involved;
Figure 3 shows a partial cross-section of a metering module used in the device according to the invention;
Figure 4 shows a top view of said module;
Figure 5 shows a top view of the device according to Figure 2; and
Fig. 6 shows a perspective view of said device.

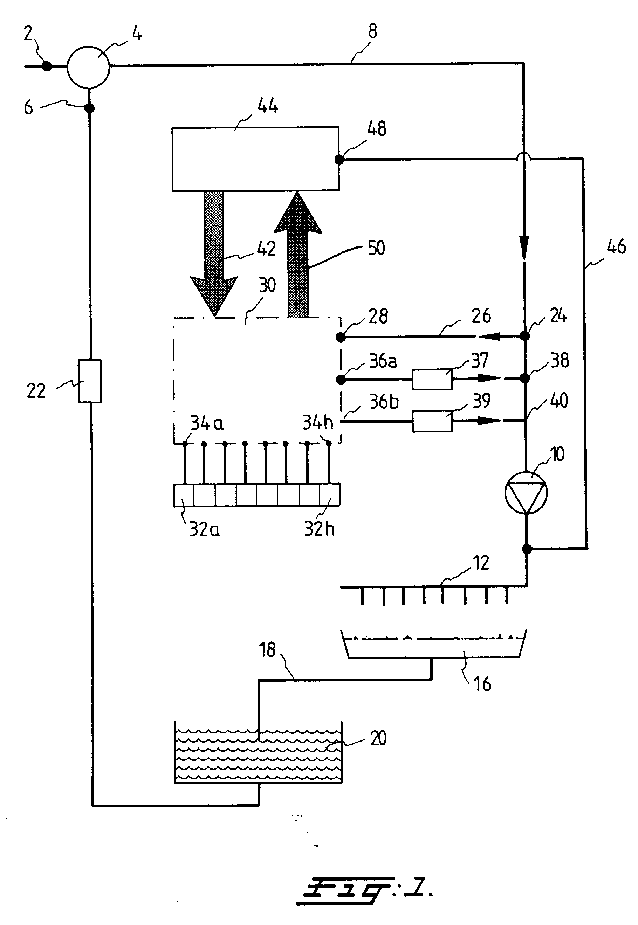

The flow chart of a plant for hydroponic cultivation in which the device according to the invention is used is shown in Figure 1. The circuit used there is as follows:

From a connection 2 the irrigation water to be used for the irrigation, and yet to be provided with nutrients and fertilizers, is fed to a mixer tap 4 for mixing there with spent irrigation water supplied through the inlet 6. The irrigation water then passes through the pipe 8 into the suction side of a pump 10 which pumps it to the irrigation nozzles 12 situated above the cultivation substrate 16. The irrigation water which is left flows through the pipe 18 to the collection tank 20, from where it flows through the disinfecting device 22 (which can, of course, be omitted in certain cases) to the connection 6 of the three-way valve 4.

At the branch 24 irrigation water is branched off and fed via the pipe 26 to the inlet 28 of the metering device 30 shown schematically by dashed and dotted lines, where it is mixed with the correct quantities of nutrients and fertilizers which are supplied via the individual tanks 32a..32h to the inlets 34a-34h of the metering device 30. The irrigation water mixed with nutrients and fertilizers is conveyed back through the two outlets 36a, 36b to the connection points 38, 40 of the pipe 8.

The metering is carried out by means of pulsating metering valves, one for each of the inlets 34a..34h, and individually controlled by means of a schematically shown control manifold 42 from a control unit 44. This control unit obtains at its inlet 48 information concerning the quantity of irrigation water which has passed the metering device. Information concerning the electrical conductivity and the acidity is also supplied.

It is also possible to analyze the irrigation water composition by means of sensors. The control unit receives information from eight individual flowmeters through the manifold 50, indicating how much of each fertilizer has been added. On the basis of these data, the control unit controls the opening times of the individual metering valves.

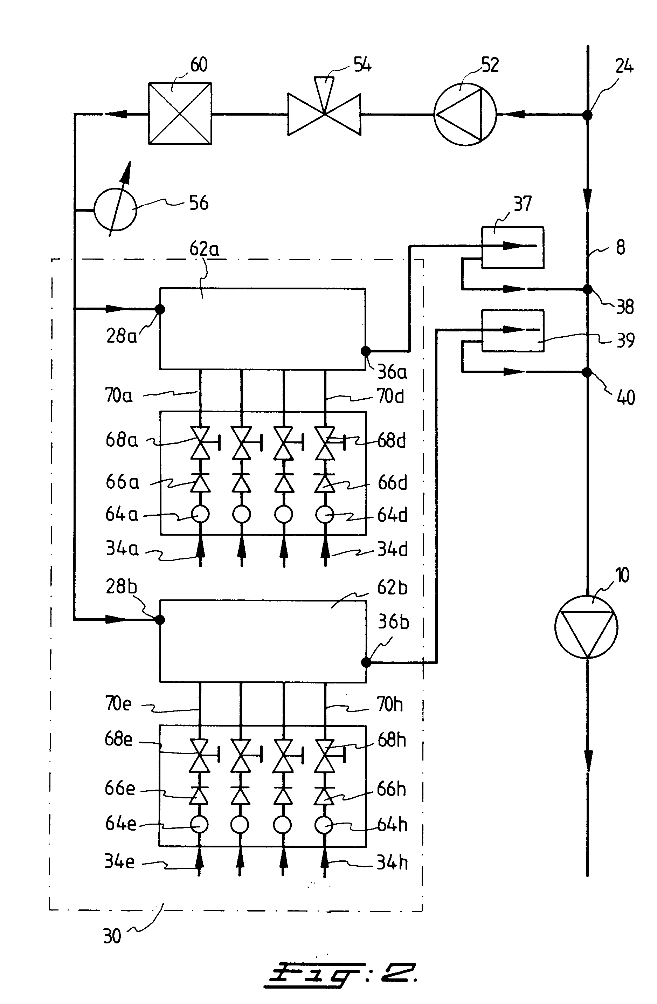

Figure 2 shows in more detail the components present inside the square 30 shown by dashed lines, with the appropriate external components. It is pointed out here that the metering device is split into two identical metering modules, each for metering four different nutrients or fertilizers. This ensures that nutrients or fertilizers which are incompatible when undiluted or with little dilution do not come into contact with each other, something which could lead to undesirable reactions.

The irrigation water branched off at 24 is brought to a certain pressure by the pump 52. It flows through the manually operated valve 54, which is adjusted by hand on the basis of the pressure indicated by the pressure recorder 56. The prepressure on the metering modules to be described below, and thus the maximum quantity of fertilizer to be sucked in, is determined in this way. It then flows via the dirt separator 60 to the inlets 28a, 28b of the two identical metering modules.

The outlets 36a, 36b thereof are connected by means of the buffer tanks 37, 39 to the branches 38, 40 on the pipe 8.

Liquid fertilizers and nutrients to be mixed with the irrigation water are supplied to each of said metering modules 62a, 62b through the inlets 34a..34d and 34e..34h respectively. In series with each inlet 34a..34h is a flowmeter 64a..64h, a non-return valve 66a..66h and a pulsatingly controlled metering valve 68a..68h. The liquid nutrients and fertilizers fed in through the injection channels 70a..70h are mixed in the metering modules 62a, 62b with the irrigation water fed in through the inlets 28a, 28b, and the resulting mixture is, as said before, discharged through the outlets 36a, 36b, and then mixed with the irrigation water flowing into the pipe 8.

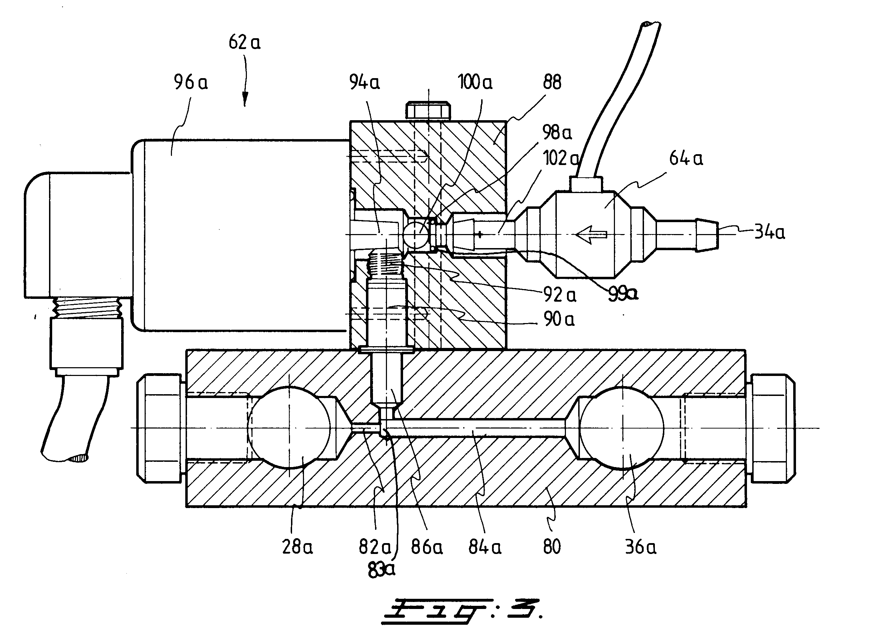

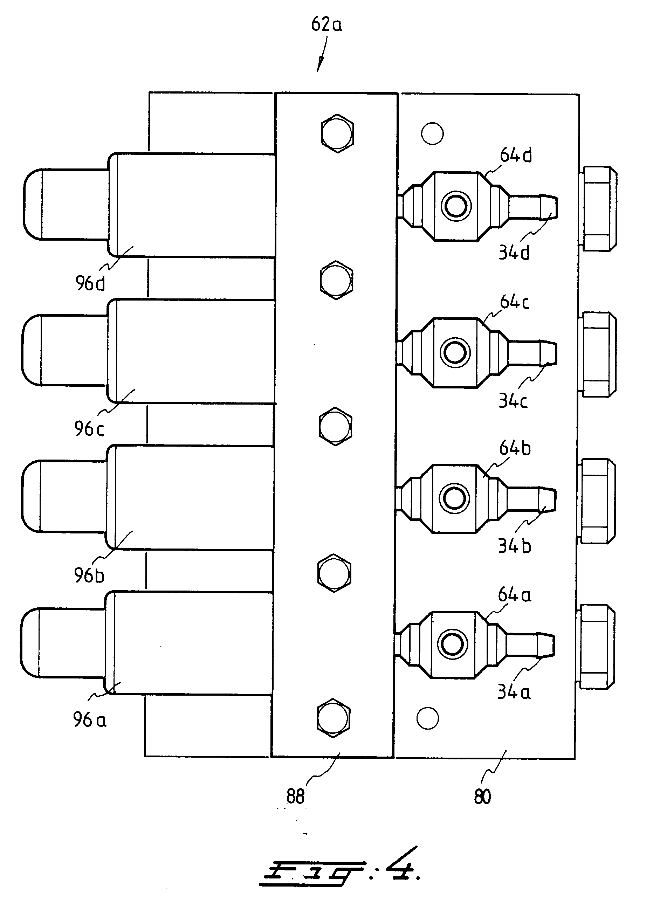

A practical embodiment of a metering module for four metering liquids is shown in Figures 3 and 4. Figure 3 shows a partial view, partial section through the metering module 62a, and Figure 4 shows a top view thereof.

This metering module 62a comprises a first housing 80 containing a number of adjacent injection channels situated at right angles to the lengthwise direction of the housing, one of which is indicated by the reference numberal 82a. The inlet end opens into the common inlet channel 28a, and the outlet end opens via the channel 84a into the common outlet channel 36a. A metering liquid supply channel is situated at right angles to each of the inlet channels, for the inlet channel 82a indicated by 86a. Each of such metering liquid supply channels lies in line with a valve channel formed in a second housing 88, for the channel 86a indicated by 90a. Each valve channel 90a contains a valve seat 92a which can be shut off by the closing element 94a of an electromagnetic metering valve mechanism 96a. By means of a transition channel 98a, which contains a ball 100a acting as a non-return valve and co-operating with a shoulder the valve channel 90a is connected to the outlet channel 102a, the inlet of which is the metering medium inlet, thus one of the inlets 34a..34d in Figure 2.

The irrigation water supplied under a certain excess overpressure through the inlet 28a to the individual channels 82a..82d flows at high speed from the outlet opening of said channel 82a into the widened part 83a, so that on this spot a vacuum is produced with the result that, when the valve element 94a opens the valve seat 92a, the metering liquid supplied through the corresponding inlet 34a is sucked in through the corresponding flowmeter 34a. The opening and closing of the valve seat 94a thus determine the metering of the metering liquid.

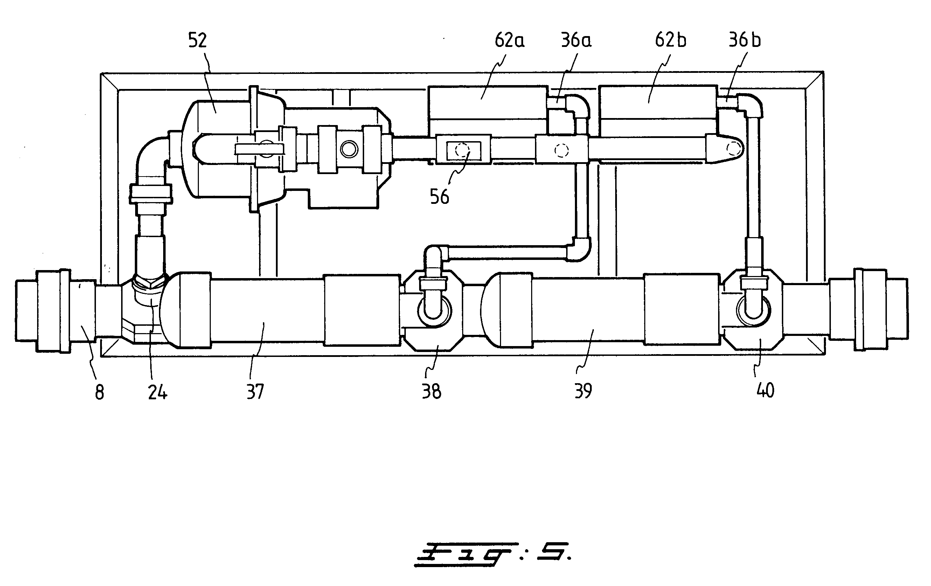

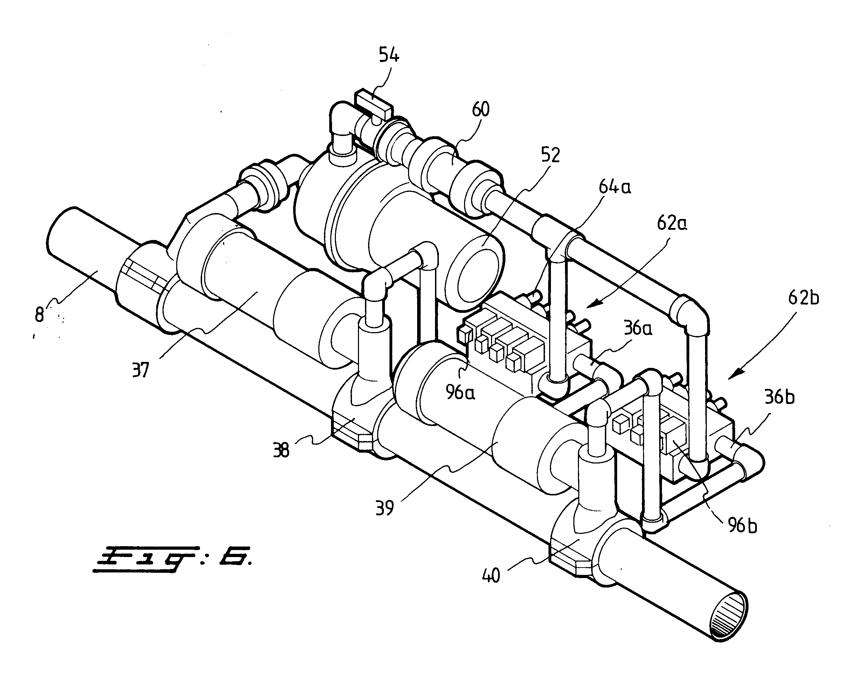

Figures 5 and 6 show how the device according to the invention is extremely suitable for combining with a self-contained unit which can be accommodated in the irrigation water pipe. It is observed that the connection at the suction side of the pump 10 circulating the irrigation water and the use of its own process pump 52 give the advantage that the metering system works independently of the system pump 10. A particularly accurate metering system can be achieved economically with the measures according to the invention.

## Claims

1. Device for the metered supply of a liquid containing a liquid fertiliser or nutrient to irrigation water flowing in a pipe (8) for hydroponic cultivation containing irrigation water at a predetermined pressure comprising
- a number of supply channels (90a..90h) for introducing a metered amount of fertiliser or nutrient into said pipe (8), each supply channel having a metering valve (68a..68h) each metering valve being connected to a measuring and control unit (44) for control of the opening of the respective metering valve (68a..68h) depending on a desired nutrient or fertiliser concentration for supplying to the irrigation water the desired quantity of metered fluid by means of the injection unit,
characterized by
- a branch (24) on the above mentioned pipe (8) with a pump (52) for bringing the branched-off irrigation water to a predetermined pressure and for re-introducing the branched-off irrigation water into the pipe (8),
- a number of injection channels (82a..82h), each of which being connected to the delivery side of said pump (52), and each having a widened part (83a..83h) at the position at which one of said supply channels (90a..90h) opens into it,
- in series in each of said supply channels (90a..90h) which each open into a corresponding injection channel (82a..82h) a flowmeter (64a..64h), a non-return valve (66a..66h) and said metering valve (68a..68h).

2. Device according to claim 1, characterized in that a number of adjacent injection channels (82a..82h) are formed in a common first housing (80), the inlet end of each channel opening out into a common inlet channel (28a..28b), and the outlet end opening into a common outlet channel (36a..36b), while the supply channels (90a..90h) situated at right angles to the respective injection channels are also formed in said housing.

3. Device according to claim 2, characterized in that each supply channel (90a..90h) connects to the outlet end of a valve (96a..96h) which is formed in a second housing and of which the inlet end interacts with the closing element of a metering valve (62a..62h), and which valve (96a..96h) is connected to the outlet channel (102a..102h) of a flowmeter (64a..64h) by means of a short transition part (98a..98h) in which a shoulder (99a..99h) co-operating with a shut-off ball (100a..100h) is formed.

4. Device according to claim 3, characterized in that a number of adjacent supply channels (90a..90h) and transition channels (98a..98h) are formed in the second housing (88), and said second housing (88) joins, and is connected to, said first housing (80).

5. Device according to claims 2-4, characterized in that each metering valve (62a..62h) and each flowmeter (64a..64h) forms an individual component.

6. Device according to claims 1-5, characterized by at least two metering modules (62a..62h) which are each formed from a first and a second housing and which are each connected by means of a buffer space (37, 39) to the irrigation water pipe (8).

## Patentansprüche

1. Vorrichtung zur dosierten Abgabe einer ein flüssiges Dünge- oder Nährmittel enthaltenden Flüssigkeit an Bewässerungswasser, das in einem das Bewässerungswasser bei einem vorbestimmten Druck enthaltenden Rohr (8) fließt, zur Hydrokulturaufzucht, wobei die Vorrichtung
- eine Anzahl von Abgabekanälen (90a ... 90h) zum Einleiten einer dosierten Menge des Dünge- oder Nährmittels in das genannte Rohr (8) umfaßt, wobei jeder Abgabekanal ein Meßventil (68a ... 68h) aufweist und jedes Meßventil mit einer Meß- und Steuereinheit (44) verbunden ist, um zur Abgabe der gewünschten Menge der dosierten Flüssigkeit mittels der Einspritzeinheit an das Bewässerungswasser das Öffnen des jeweiligen Meßventils (68a ... 68h) in Abhängigkeit von einer gewünschten Nähr- oder Düngemittelkonzentration zu steuern,
gekennzeichnet durch
- eine Abzweigung (24) an dem oben erwähnten Rohr (8) mit einer Pumpe (52), um das abgezweigte Bewässerungswasser auf einen vorbestimmten Druck zu bringen und das abgezweigte Bewässerungswasser wieder in das Rohr (8) einzuleiten,
- eine Anzahl von Einspritzkanälen (82a ... 82h), von denen jeder mit der Austrittsseite der genannten Pumpe (52) verbunden ist und jeder einen erweiterten Teil (83a...83h) an der Stelle aufweist, an der einer der genannten Abgabekanäle (90a ... 90h) sich in ihn öffnet,
- der Reihe nach in jedem der genannten Abgabekanäle (90a ... 90h), von denen sich jeder in einen zugehörigen Einspritzkanal (82a ... 82h) öffnet, einen Durchflußmesser (64a ... 64h), ein Rückschlagventil (66a ... 66h) und ein genanntes Meßventil (68a ... 68h).

2. Vorrichtung gemäß Anspruch 1, dadurch **gekennzeichnet,** daß eine Anzahl benachbarter Einspritzkanäle (82a ... 82h) in einem gemeinsamen ersten Gehäuse (80) ausgebildet sind, wobei das Einlaßende eines jeden Kanals sich in einen gemeinsamen Einlaßkanal (28a ... 28b) hinein öffnet und das Auslaßende sich in einen gemeinsamen Auslaßkanal (36a ... 36b) öffnet, während die in rechten Winkeln zu den jeweiligen Einspritzkanälen angeordneten Abgabekanäle (90a ... 90h) ebenfalls in dem genannten Gehäuse ausgebildet sind.

3. Vorrichtung gemäß Anspruch 2, dadurch **gekennzeichnet,** daß jeder Abgabekanal (90a ... 90h) mit dem Auslaßende eines Ventils (96a ... 96h) verbunden ist, das in einem zweiten Gehäuse ausgebildet ist und dessen Einlaßende mit dem Schließele-ment eines Meßventils (62a ... 62h) zusammenwirkt und das mit dem Auslaßkanal (102a ... 102h) eines Durchflußmessers (64a ... 64h) mittels eines kurzen Übergangsteils (98a ... 98h) verbunden ist, in dem eine mit einer Absperrkugel (100a ... 100h) zusammenwirkende Schulter (99a ... 99h) ausgebildet ist.

4. Vorrichtung gemäß Anspruch 3, dadurch **gekennzeichnet,** daß eine Anzahl benachbarter Abgabekanäle (90a ... 90h) und Übergangskanäle (98a ... 98h) in dem zweiten Gehäuse (88) ausgebildet sind, und das genannte zweite Gehäuse (88) an das genannte erste Gehäuse (80) anschließt und mit diesem verbunden ist.

5. Vorrichtung gemäß den Ansprüchen 2 - 4, dadurch **gekennzeichnet,** daß jedes Meßventil (62a ... 62h) und jeder Durchflußmesser (64a ... 64h) als einzelnes Bauteil ausgebildet ist.

6. Vorrichtung gemäß den Ansprüchen 1 - 5,
**gekennzeichnet** durch mindestens zwei Meßmodule (62a ... 62h), von denen jedes aus einem ersten und einem zweiten Gehäuse gebildet ist und von denen jedes mittels eines Puffervolumens (37, 39) mit dem Bewässerungswasserrohr (8) verbunden ist.

## Revendications

1. Dispositif pour l'introduction dosée d'un liquide contenant un engrais liquide ou une substance nutritive liquide dans de l'eau d'irrigation s'écoulant dans une conduite (8) pour culture hydroponique, contenant de l'eau d'irrigation à une pression prédéterminée, comprenant :
- un nombre de canaux d'alimentation (90a..90h) pour introduire une quantité dosée d'engrais ou de substance nutritive dans ladite conduite (8), chaque canal d'alimentation ayant une soupape de dosage (68a..68h), chaque soupape de dosage étant reliée à une unité de mesure et de commande (44) pour la commande de l'ouverture de la soupape de dosage respective (68a..68h) en fonction d'une concentration désirée en substance nutritive ou engrais pour introduire dans l'eau d'irrigation la quantité désirée de fluide dosé au moyen de l'unité d'injection,
caractérisé par :
- un branchement (24) sur la conduite (8) mentionnée ci-dessus avec une pompe (52) pour amener l'eau d'irrigation dérivée à une pression prédéterminée et pour ré-introduire l'eau d'irrigation dérivée dans la conduite (8),
- un nombre de canaux d'injection (82a..82h), chacun d'eux étant relié au côté de refoulement de ladite pompe (52), et chacun ayant une partie élargie (83a..83h) au niveau de la position dans laquelle l'un desdits canaux d'alimentation (90a..90h) s'ouvre dans celui-ci,
- en série dans chacun desdits canaux d'alimentation (90a..90h) qui s'ouvrent chacun dans un canal d'injection correspondant (82a..82h), un débitmètre (64a..64h), une soupape anti-retour (66a..66h) et ladite soupape de dosage (68a..68h).

2. Dispositif selon la revendication 1, caractérisé par le fait qu'un nombre de canaux d'injection adjacents (82a..82h) sont formés dans un premier carter commun (80), l'extrémité d'entrée de chaque canal débouchant dans un canal d'entrée commun (28a..28b), et l'extrémité de sortie débouchant dans un canal de sortie commun (36a..36b), alors que les canaux d'alimentation (90a..90h) situés à angle droit par rapport aux canaux d'injection respectifs sont également formés dans ledit carter.

3. Dispositif selon la revendication 2, caractérisé par le fait que chaque canal d'alimentation (90a..90h) est relié à l'extrémité de sortie d'une soupape (96a..96h) qui est formée dans un second carter et dont l'extrémité d'entrée interagit avec l'élément de fermeture d'une soupape de dosage (62a..62h), et laquelle soupape (96a..96h) est reliée au canal de sortie (102a..102h) d'un débitmètre (64a..64h) au moyen d'une courte partie de transition (98a..98h) dans laquelle un épaulement (99a..99h) coopérant avec une bille d'arrêt (100a..100h) est formé.

4. Dispositif selon la revendication 3, caractérisé par le fait qu'un nombre de canaux d'alimentation adjacents (90a..90h) et canaux de transition (98a..98h) sont formés dans le second carter (88), et ledit second carter (88) rejoint ledit, et est relié audit, premier carter (80).

5. Dispositif selon les revendications 2-4, caractérisé par le fait que chaque soupape de dosage (62a..62h) et chaque débitmètre (64a..64h) forment un composant individuel.

6. Dispositif selon les revendications 1-5, caractérisé par au moins deux modules de dosage (62a..62h) qui sont chacun formés à partir d'un premier et d'un second carter et qui sont chacun reliés au moyen d'un espace tampon (37, 39) à la conduite (8) d'eau d'irrigation.
